Europäisches Patentamt

European Patent Office

Office européen des brevets

(11) Publication number : **0 559 515 A1**

(12) **EUROPEAN PATENT APPLICATION**

(21) Application number : 93400426.8

(22) Date of filing : 18.02.93

(51) Int. Cl.$^5$ : **C08L 13/00**, C08L 15/00, C08L 83/04, C08L 83/06, C08L 83/08

(30) Priority : **18.02.92 JP 69130/92**

(43) Date of publication of application : **08.09.93 Bulletin 93/36**

(84) Designated Contracting States : **DE FR GB IT**

(71) Applicant : **RHONE-POULENC CHIMIE 25, quai Paul Doumer F-92408 Courbevoie Cédex (FR)**

(72) Inventor : **Mitsuyoshi, Aonuma 6-1, Motoyoyogi-cho, Shibuya-ku Tokyo (JP)**
Inventor : **Shigeru, Okamura 8-16, Chuo 1-chome Sagamihara-shi, Kanagawa-ken (JP)**
Inventor : **Meyer, Soria 142 rue Dedieu F-69100 Villeurbanne (FR)**
Inventor : **Branlard, Paul 27 rue Soeur Bouvier F-69005 Lyon (FR)**

(54) **Rubber formulation.**

(57)  A rubber formulation comprising, based on the weight of the rubber formulation, (a) 2 to 98% by weight of a hydrogenated nitrile rubber containing at least one functional group selected from a carboxylic acid group and an epoxy group, and (b) 98 to 2% by weight of an organopolysiloxane containing a functional group capable of reacting with the above-mentioned functinal group. The hydrogenated nitrile rubber and the organopolysiloxane are crosslinked with and dispersed in each other.

EP 0 559 515 A1

Jouve, 18, rue Saint-Denis, 75001 PARIS

This invention relates to a rubber formulation comprised of a hydrogenated nitrile rubber containing a carboxylic acid group and/or an epoxy group and an organopolysiloxane having a functional group capable of reacting with the carboxylic acid group and/or the epoxy group of the hydrogenated nitrile rubber.

By the fact that the carboxylic acid group and/or the epoxy group of the hydrogenated nitrile rubber is reacted with the functinal group of the organopolysiloxane, the dispersibility of the hydrogenated nitrile rubber and the organopolysiloxane with each other are improved. Therefore, the roll processability of an uncured rubber formulation is enhanced, and the rubber formulation gives a crosslinked rubber composition exhibiting good tensile strength, heat aging resistance, cold resistance and oil resistance.

A silicone rubber has a good release property, heat aging resistance, cold resistance and weatherability, but has a poor tensile strength, oil resistance and water resistance. In contrast, a hydrogenated nitrile rubber has a good tensile strength, oil resistance and heat resistance, but is not satisfactory in performances capable of coping with severe conditions of heat aging resistance, cold resistance and weatherability. Accordingly, it is expected that a satisfactory rubber formulation will be obtained with a combination of a silicone rubber and a hydrogenated nitrile rubber because the two rubbers offset the defects with each other.

As the known technique of mixing a silicone rubber and a hydrogenated nitrile rubber, there can be mentioned a process wherein a silicone rubber is mechanically mixed with a hydrogenated nitrile rubber, as disclosed in German Patent No. 3812354. The mechanical mixing disclosed is a simple mechanical mixing conventionally employed in mixing together rubbers having a good compatibility with each other. However, the hydrogenated nitrile rubber has a poor compatibility with the silicone rubber and has a viscosity much higher than that of the silicone rubber. Further, the silicone rubber is different from the hydrogenated nitrile rubber in the induction time of a crosslinking reaction and the rate of crosslinking reaction. Therefore, even though the two rubbers are kneaded together by the above mechanical kneading, it is difficult or even impossible to obatin a homogeneous rubber formulation, and a cured product of the rubber formulation of the two rubbers has unsatisfactory physical properties, and thus, good characteristics of the two rubbers cannot be manifested.

It is therefore a primary object of the invention to provide a rubber formulation exhibiting good roll processability in an uncrosslinked state, tensile strength, heat aging resistance, cold resistance and oil resistance, by amelioration of the poor mechanical mixing compatibility between a silicone rubber and a hydrogenated nitrile rubber.

In accordance with the present invention, there is provided a rubber formulation comprising, based on the weight of the rubber formulation:

(a) 2 to 98% by weight of a hydrogenated nitrile rubber having a functinal group selected from a carboxylic acid group and an epoxy group and preferably having an iodine value not larger than 120, and

(b) 98 to 2% by weight of an organopolysiloxane having a functional group which is capable of reacting with said functional group of ingredient (a).

The hydrogenated nitrile rubber (a) used in the invention has a functional group selected from a carboxylic acid group and an epoxy group. By the term "carboxylic acid group" used herein, we mean not only a carboxyl group but also a carboxylate group and a carboxylic anhydride group.

Usually, the content of the functional group selected from a carboxylic acid group and an epoxy group is 0.5 to 70 m-mol, preferably 1 to 30 m-mol, per 100 g of the hydrogenated nitrile rubber. If the content of the functional group is smaller than 0.5 m-mol, the reaction of the functional group of the hydrogenated nitrile rubber with the functional group of the organopolysiloxane (b) does not occur to the desired extent. In contrast, if the content of the functional group exceeds 70 m-mol, the reaction between the two functional groups occurs to an excessive extent and the rubber formulation becomes gel-like with the result that the roll processability of an uncured rubber formulation becomes deteriorated and the physical properties of the cured rubber product are not satisfactory. The hydrogenated nitrile rubber having the above-mentioned functional group can be used in combination with a hydrogenated nitrile rubber not having the functional group provided that the content of the functional group in the sum of the two hydrogenated nitrile rubbers is within the above range.

The manner in which the functional group selected from a carboxylic acid group and an epoxy group is bonded to the hydrogenated nitrile rubber is not particularly limited. Usually, the hydrogenated nitrile rubber having the functional group is obtained by copolymerizing an unsaturated monomer having the functional group into the hydrogenated nitrile rubber or graft-polymerizing such a monomer onto the hydrogenated nitrile rubber. More specifically, the hydrogenated nitrile rubber having the functional group is obtained by copolymerizing an unsaturated monomer having the functional group in the step of preparing a nitrile rubber before hydrogenation, or by graft-polymerizing such a monomer onto a nitrile rubber before hydrogenation or onto a hydrogenated nitrile rubber. These copolymerization and graft-copolymerization can be effected by any polymerization procedure which includes emulsion, suspension, solution and bulk polymerization procedures. In addition to these procedures, the graft-copolymerization can be carried out under kneaded conditions by using a closed type kneader such as a Banbury mixer, or a continuous kneader such as a single-screw extruder or a twin-screw extruder. Usually, radical initiators are used as a catalyst, but the reaction mixture may be heated without the use of a catalyst.

The molecular weight of the hydrogenated nitrile rubber having the functional group is not particularly limited, and the weight average molecular weight is usually in the range of 30,000 to 1,000,000. It is preferable, however, to use a liquid hydrogenated nitrile rubber having a carboxylic acid group and/or epoxy group and having a weight average molecular weight of 1,000 to 10,000 in combination with a high molecular weight solid hydrogenated nitrile rubber having a weight average molecular weight of of 30,000 to 1,000, 000. The liquid hydrogenated nitrile rubber is advantageous in that it is easy to introduce a carboxyl group and/or an epoxy group therein. When the liquid hydrogenated nitrile rubber is used in combination a high molecular weight solid hydrogenated nitrile rubber, the solid hydrogenated nitrile rubber either may or may not have a carboxyl group and/or an epoxy group.

The hydrogenated nitrile rubber used in the invention can be prepared by completely or partially hydrogenating a nitrile rubber by a conventional process.

The hydrogenation degree of the hydrigenated nitrile rubber can be expressed by the iodine value, and in the present invention, a hydrogenated nitrile rubber having an iodine value not larger than 120, preferably not larger than 60, is usually used.

The hydrogenated nitrile rubber includes a product obtained by hydrogenating an $\alpha,\beta$-unsaturated nitrile/conjugated diene copolymer and a product obtained by hydrogenating an $\alpha,\beta$-unsaturated nitrile/conjugated diene/ethylenically unsaturated monomer terpolymer.

As the $\alpha,\beta$-unsaturated nitrile, there can be mentioned acrylonitrile and methacrylonitrile, and as the conjugated diene, there can be mentioned 1,3-butadiene, 2,3-dimethylbutadiene, isoprene and 1,3-pentadiene. As the ethylenically unsaturated monomer, there can be mentioned vinyl aromatic compounds such as styrene, p-t-butylstyrene and chloromethylstyrene; alkyl esters of unsaturated monocarboxylic acids such as methyl acrylate, methyl methacrylate, ethyl acrylate, ethyl methacrylate, 2-ethylhexyl acrylate and 2-ethylhexyl methacrylate; alkoxyalkyl esters of unsaturated monocarboxylic acids such as methoxyethyl acrylate, methoxyethyl methacrylate, ethoxyethyl acrylate and ethoxyethyl methacrylate; dialkyl esters of unsaturated dicarboxylic acids such as dimethyl itaconate, dimethyl maleate, dimethyl fumarate and dimethyl phthalate; unsaturated monocarboxylic acids, unsaturated dicarboxylic acids and monoesters thereof, such as acrylic acid, methacrylic acid, maleic acid and monoesters of itaconic acid; and acrylamide and methacrylamide, and N-substituted acrylamide and N-substituted methacrylamide, such as N,N-dimethylacrylamide, N,N-dimethylmethacrylamide, N-methoxyethylacrylamide and N-methoxyethylmethacrylamide.

As the unsaturated monomer used for introducing a carboxylic acid group and/or an epoxy group into the hydrogenated nitrile rubber by a copolymerization or a graft-copolymerization, there can be mentioned unsaturated carboxylic acid monomers, unsaturated carboxylic anhydride monomers and unsaturated carboxylic acid ester monomers, and epoxy group-containing unsaturated monomers. The unsaturated carboxylic acid, carboxylic anhydride and carboxylic acid ester monomers include, for example, acrylic acid, methacrylic acid, crotonic acid, 2-pentanoic acid, maleic acid, fumaric acid, itaconic acid, monomethyl maleate, monoethyl maleate, mono-2-ethylhexyl maleate, monomethyl fumarate, monoethyl fumarate, monobutyl fumarate, monomethyl itaconate, monoethyl itaconate, mono-2-ethylhexyl itaconate, maleic anhydride and itaconic anhydride. The epoxy group-containing unsaturated monomers include, for example, allyl glycidyl ether, glycidyl acrylate and glycidyl methacrylate.

The organopolysiloxane (b) used in the invention has a functional group which is capable of reacting with the carboxylic acid group and/or epoxy group of the hydrogenated nitrile rubber. As the functional groups of the organopolysiloxane, there can be mentioned an amino group, a hydroxyl group, a carboxyl group and an epoxy group.

The content of the functional group in the organopolysiloxane is preferably in the range of 0.5 to 70 m-mol, more preferably of 1 to 30 m-mol, per 100 g of the organopolysiloxane. If the content of the functional group is smaller than 0.5 m-mol, the reaction between the functinal group of the organopolysiloxane and the functional group of the hydrogenated nitrile rubber does not occur to the desired extent and the desired compatibility cannot be attained. In contrast, if the content of the functional group exceeds 70 m-mol, said reaction occurs to an undue extent and the rubber formulation becomes gel-like with the result that the roll processability of an uncured rubber formulation is poor and the cured product has deteriorated physical properties.

The organopolysiloxane having the functinal group can be used in combination with an oranopolysiloxane not having the fuctional group provided that the content of the functional group in the sum of the two organopolysiloxanes is within the above-metioned range.

The organopolysiloxane used in the invention is comprised of recurring units of a siloxane with a substituted hydrocarbon group having introduced therein the above-mentioned functional group. The recurring units of a siloxane before the introduction of the functional group are represented by the following average compo-

sition formula:

$$R_aSi_{(4-a)/2}$$

wherein R represents a substituted or unsubstituted hydrocarbon group, and $\underline{a}$ is a number of from 1 to 3.

As the group R in the formula, there can be mentioned alkyl groups having 1 to 9 carbon atoms such as a methyl group, an ethyl group, a propyl group and a butyl group; aryl groups having 6 to 9 carbon atoms such as a phenyl group and a tolyl group; alkenyl groups having 2 to 9 carbon atoms such as a vinyl group and an allyl group; groups having up to 9 carbon atoms in which at least one hydrogen atom bonded to carbon atoms of these hydrocarbon groups is substituted with a halogen atom, a cyano group or another group; and groups having up to 9 carbon atoms in which at least one hydrogen atom of the alkyl group is substituted with a mercapto group. The recurring units in the organopolysiloxane (b) used in the invention, to which the functional group has been introduced, is characterized in that the group R is a hydrocarbon group having a substituent selected from an amino group, a hydroxyl group, a carboxylic acid group or an epoxy group, or having a hydrocarbon substituent group having a substituent selected from the above-mentioned groups.

The organopolysiloxane having the specific functional group is usually solid. The solid organopolysiloxane may be a mixture with a liquid organopolysiloxane usually having a weight average molecular weight of 500 to 50,000. A typical example of the liquid organopolysiloxane used in the invention is a modified silicone oil having the specific functional group. The liquid organopolysiloxane is advantageous in that it is easy to introduce the specific functional group. When the liquid organopolysiloxane is used in combination with a solid organopolysiloxane, the solid organopolysiloxane either may or may not have the specific functional group.

The organopolysiloxane used in the invention contains carbon-to-carbon unsaturated bonds preferably at a concentration of at least 100 ppm. If the content of carbo-to-carbon unsaturated bonds is lower than 100 ppm, a crosslinked product of the rubber formulation of the present invention has a poor tensile strength. An organopolysiloxane having a carbon-to-carbon unsaturated bond content of at least 200 ppm is more preferably used.

In the invention, the organopolysiloxane having the functional group capable of reacting with the functional group of the hydrogenated nitrile rubber is used. The functional group possessed by the organopolysiloxane is not particularly limited provided that this functional group is capable of reacting with a carboxylic acid group and/or an epoxy group possessed by the hydrogenated nitrile rubber. As preferable combinations of the hydrogenated nitrile rubber and the organopolysiloxane, there can be mentioned a combination of a hydrogenated nitrile rubber having a carboxylic acid group and an organopolysiloxane having an amino group, a hydroxyl group or an epoxy group, and a combination of a hydrogenated nitrile rubber having an epoxy group and an organopolysiloxane having an amino group, a hydroxyl group or a carboxylic acid group.

A filler can be incorporated in one or both of the hydrogenated nitrile rubber and the organopolysioxane prior to the preparation of the rubber formulation of the invention or at the step of preparing the rubber formulation of the invention, or in the rubber formulation of the invention after the preparation thereof.

As the filler to be incorporated in the organopolysiloxane, the hydrogenated nitrile rubber or the rubber formulation of the invention, there can be mentioned inorganic fillers such as dry silica, wet silica, quartz powder, diatomaceous earth, carbon black, zinc oxide, basic magnesium carbonate, active calcium carbonate, magnesium silicate, aluminum silicate, titanium dioxide, talc, mica powder, aluminum sulfate, calcium sulfate, barium sulfate, asbestos and glass fiber; and organic fillers or organic reinforcers such as polyester fibers, aramid fibers and other polyamide fibers, and vinylon fiber. These fillers may be used either alone or in combination.

Of these fillers, reinforcing fillers such as dry silica, wet silica and carbon black are preferably used. Dry silica and wet silica having a specific surface area of at least 50 $m^2/g$, especially 100 to 400 $m^2/g$, are preferably used. Such silica can be used as it is, or can be used after the surface treatment with an organic silicon compound such as an organochlorosilane, an organoalkoxysilane, an organopolysiloxane or a hexaorganodisilazane.

The hydrogenated nitrile rubber (a) having a carboxylic acid group and/or an epoxy group and the organopolysiloxane (b) having a functional group capable of reacting with the carboxylic acid group and/or an epoxy group of the rubber (a) are used in a proportion such that the amount of (a) is 98 to 2% by weight, preferably 80 to 20% by weight, and the amount of (b) is 2 to 98% by weight, preferably 20 to 80% by weight, based on the weight of the rubber formulation. If the amount of (a) exceeds 98% by weight, i.e., the amount of (b) is smaller than 2% by weight, or the amount of (a) is smaller than 2% by weight, i.e., the amount of (b) exceeds 98% by weight, each of the two ingredients (a) and (b) cannot offsets the defects of the other of the ingredients (a) and (b), and a crosslinked rubber formulation having good and well balanced tensile strength, thermal resistance, cold resistance and oil resistance cannot be obtained.

The rubber formulation of the present invention becomes a composition having the desired properties by the reaction of the hydrogenated nitrile rubber (a) having a carboxylic acid group and/or an epoxy group with the organopolysiloxane (b) having a functional group capable of reacting with the carboxylic acid group and/or the epoxy group of (a). The reaction of (a) with (b) can be carried out in a solution state using a solvent capable of dissolving both (a) and (b) therein, or in the solid phase under kneaded conditions. The reaction in the solution state can be carried out in a common solvent, for example, aromatic hydrocarbons such as benzene and toluene, halogen-substituted hydrocarbons such as trichloroethylene and dichloroethylene, ketones such as methyl isobutyl ketone, and esters such as ethyl acetate, at a temperature of 0° to 200°C for a period of several minutes to several hours. The concentrations of the two rubber ingredients (a) and (b) in the solution are not particularly limited provided that the viscosity of the solution is such that the solution can be stirred. The reaction in the solid phase can be carried out by kneading the two rubber ingredients (a) and (b) at a temperature of 20 to 300°C for a period of one minute to 60 minutes by using a kneader.

The rubber formulation of the invention includes (i) a rubber formulation wherein the hydrogenated nitrile rubber (a) having a carboxylic acid group and/or an epoxy group is dispersed in the organopolysiloxane (b) having the functional group in the state that the hydrogenated nitrile rubber (a) is crosslinked with the organopolysiloxane (b) by the reaction of the carboxylic acid group and/or the epoxy group of (a) with the functional group of (b), and (ii) a rubber formulation wherein the organopolysiloxane (b) having the functional group is dispersed in the hydrogenated nitrile rubber (a) having a carboxylic acid group and/or an epoxy group in the state that the organopolysiloxane (b) is crosslinked with the hydrogenated nitrile rubber (a) by the reaction of the carboxylic acid group and/or the epoxy group of (a) with the functional group of (b). The two rubber formulations (i) and (ii) can be a cured rubber product by incorporating therein a crosslinking agent.

The above-mentioned rubber formulation (i) is usually comprised of 2 to 60% by weight of the hydrogenated nitrile rubber and 98 to 40% by weight of the organopolysiloxane. The content of the carboxylic acid group and/or the epoxy group in the hydrogenated nitrile rubber (a) is preferably 10 to 70 m-mol per 100 g of (a), and the content of the functional group in the organopolysiloxane (b) is preferably 0.5 to 20 m-mol per 100 g of (b). Especially, as the organopolysiloxane (b), a mixture of a liquid organopolysiloxane having the functional group capable of reacting with the carboxylic acid group and/or the epoxy group of (a) and an organopolysiloxane not having the fuctional group is preferably used. The crosslinking degree of the crosslinked hydrogenated nitrile rubber (a) dispersed in the organopolysiloxane (b) is preferably such that at least 40% of the rubber (a) is insoluble in toluene.

The above-mentioned rubber formulation (ii) is usually comprised of 2 to 60% by weight of the organopolysiloxane (b) and 98 to 40% by weight of the hydrogenated nitrile rubber (a). The content of the functional group in the organopolysiloxane (b) is preferably 10 to 70 m-mol per 100 g of (b), and the content of the carboxylic acid group and/or the epoxy group in the hydrogenated nitrile rubber (a) is preferably 0.5 to 20 m-mol per 100 g of (a). Especially, as the hydrogenated nitrile rubber (a), a mixture of a liquid hydrogenated nitrile rubber having the carboxylic acid group and/or the epoxy group and a hydrogenated nitrile rubber not having the carboxylic acid group and/or the epoxy group is preferably used. The crosslinking degree of the crosslinked organopolysiloxane (b) dispersed in the hydrogenated nitrile rubber (a) is preferably such that at least 40% by weight of (b) is insoluble in toluene.

The above-mentioned rubber formulations (i) and (ii) can be prepared by kneading the two rubber ingredients (a) and (b) at a temperature of 20 to 300°C for one to 60 minutes in a kneader. The manner and the order in which the two rubber ingredients are incorporated in the kneader are not particularly limited. The two rubber ingredients can be incorporated either simultaneously or sequentially, or as divided portions. When a liquid polymer having the functional group is used, this liquid polymer may be incorporated alone in the midway of the kneading.

The preparation of the rubber formulation of the invention can be performed by using a reactor such as an autoclave, an open type kneader such as a mixing roll, a closed type kneader such as a Brabender mixer or a Banbury mixer, or a continuous kneader such as a single-screw extruder, a twin-screw extruder, a Farrel mixer or a Buss cokneader. Preferably the preparation temperature is in the range from 0 to 300°C.

The rubber formulation of the invention can have incorporated therein a filler and a crosslinking agent as general organic rubber formulations. As the filler, those which are hereinbefore mentioned can be used. As the crosslinking agent, conventional crosslinking agents such as sulfur and derivatives thereof, and peroxides are used.

As the sulfur derivatives, there can be mentioned, for example, dibenzothiazyl disulfide, 2-mercaptobenzothiazole, tetramethylthiuram tetrasulfide, dipentamethylenethiuram disulfide and zinc dimethylthiocarbamate.

As specific examples of the peroxide crosslinking agent used in the present invention, there can be mentioned 2,5-dimethyl-2,5-di(t-butylperoxy)hexine-3, 2,5-dimethyl-2,5-di(t-butylperoxy)hexane, 2,2-bis(t-butylperoxy)-p-diisopropylbenzene, dicumyl peroxide, di-t-butyl peroxide, t-butyl perbenzoate, 1,1-bis(t-butylperoxy)-3,3,5-trimethylcyclohexane, benzoyl peroxide, 2,4-dichlorobenzoyl peroxide, p-chlorobenzoyl peroxide, 2,4-dicumyl peroxide, dialkyl peroxide and ketal peroxide.

A useful crosslinked rubber product is obtained by crosslinking the rubber formulation of the present invention. In general, crosslinking is carried out at a temperature of 100 to 250°C under a pressure of 0 to 300 kg/cm² for 5 seconds to 10 hours (including the post-crosslinking time). These crosslinking conditions can be attained by irradiation with energy rays such as thermal rays, electron beams, ultraviolet rays and electromagnetic waves.

Crosslinking of the rubber formulation of the invention is performed by customary procedures, for example, by batch-wise curing utilizing press molding, transfer molding, injection molding or vulcanizer molding, or by continuous curing utilizing a hot chamber, a pressure tube, a curing funnel, a salt bath, a fluidized bed or a high-frequency heater.

The process for the preparation of the rubber formulation of the invention is not particularly limited, and an ordinary preparation process adopted for mixing rubbers can be adopted.

In the rubber formulation of the invention, known additives customarily used for rubbers can be added in addition to the filler and crosslinking agent.

For example, metal oxides, amines, fatty acids and derivatives thereof can be used as a processing assistant, and polydimethylsiloxane oils, diphenylsilane diols, trimethylsilanols, phthalic acid derivatives, adipic acid derivatives and trimellitic acid derivatives can be used as a plasticizer. Furthermore, there can be used lubricating oils, process oils, coal tar, castor oil and calcium stearate as a softener, and there can be used phenylenediamines, phosphates, quinolines, cresols, phenols and metal dithiocarbamates as an anti-aging agent. Still further, heat-resisting agents such as iron oxide, cesium oxide, potassium hydroxide, iron naphthenate and potassium naphthenate can be used, and a lubricant, a tackifier, a scorch-preventing agent, a crosslinking promoter, a crosslinking assistant, a promoter assistant, a crosslinking-retarding agent, a colorant, an ultraviolet absorber, a flame retardant, an oil resistance improver, a foaming agent and others can optionally be used.

Additives such as mentioned above can be added in the course of preparing the rubber formulation of the present invention according to need.

In the rubber formulation of the invention, the carboxylic acid group and/or epoxy group of the hydrogenated nitrile rubber is reacted with the functional group of the organopolysiloxane. Therefore, the affinity of the hydrogenated nitrile rubber with the organopolysiloxane can be increased. Namely, the rubber formulation of the invention is different from a known simple mixture of a hydrogenated nitrile rubber and a silicone rubber in that the dispersibility of the two rubber components is highly improved. Furthermore, although a long time is required for winding up the the simple mixture on a roll, the rubber formulation of the invention can be promptly wound up on a roll and the roll processability can be highly improved.

Moreover, the crosslinked rubber composition obtained by crosslinking the rubber fromulation of the invention has good mechanical properties represented by the tensile strength, and exhibits a good heat resistance, cold resistance and oil resistance.

The rubber formulation of the invention having such good properties can be widely used in the fields of mineral industries and the fields of chemical industries. Especially, the rubber formulation of the invention can be valuably used as hoses, for example, automobile hydraulic pressure hoses, automobile air hoses and automobile radiator hoses, which are used in contact with a solvent, an oil, water or air, hydraulic pressure hoses of various machines such as construction machines and processing machines, seals such as O-rings, packings, gaskets and oil seals, boots such as uniform motion boots, diaphragms, cables, caps, rolls and belts.

The invention will now be specifically described by the following examples which illustrate only embodiments of the invention and by no means limit the scope of the invention.

In the examples and comparative examples, "parts" and "%" are by weight unless otherwise specified.

Hydrogenated nitrile rubbers used in the examples and comparative examples are as follows.

HNBR-1:

A hydrogenated nitrile rubber having a Mooney viscosity of 25, an iodine value of 28 and a bound acrylonitrile content of 36%, which was prepared by hydrogenating a nitrile rubber having a bound acrylonitrile content of 36% by a conventional procedure.

HNBR-2:

A hydrogenated nitrile rubber having a Mooney viscosity of 28, an iodine value of 32, a bound acrylonitrile content of 36% and a bound methacrylic acid content of 20.5 m-mol/100g, which was prepared by hydrogenating an acrylonitrile-butadiene-methacrylic acid copolymer rubber.

HNBR-3:

A hydrogenated nitrile rubber having an acid anhydride group content of 13.4 m-mol/100 g and an iodine value of 25, which was prepared from HNBR-1 as follows. HNBR-1 was dissolved in methyl ethyl ketone, and maleic anhydride was added to the HNBR-1 solution. In an autoclave, a solution of benzoyl peroxide in methyl ethyl ketone was continuously incorporated in the HNBR-1 solution in a nitrogen gas atmosphere at 95°C over a period of 4 hours. The reaction product was reprecipitated from a mixed solvent of n-hexane and diethyl ether to give a malenized HNBR3.

HNBR-4:

An epoxidized hydrogenated nitrile rubber having an epoxy group content of 16.5 m-mol/100 g and an iodine value of 26, which was prepared by reacting HNBR-1 with glycidyl methacrylate in a manner substantially similar to that in the malenizing reaction for the preparation of HNBR-3.

HNBR-5:

A hydrogenated nitrile rubber composition obtained by incorporating 20 parts of Aerosil #200, supplied by Degussa, by a roll in a hydrogenated nitrile rubber having an acid anhydride group content of 5.3 m-mol/100g and an iodine value of 26 which was prepared in a manner substantially similar to that for the preparation of HNBR-3.

HNBR-6:

A hydrogenated nitrile rubber composition obtained by incorporating 20 parts of Aerosil #200 in HNBR-3 by a roll.

HNBR-7:

A hydrogenated nitrile rubber composition obtained by incorporating 20 parts of Aerosil #200 by a roll in a hydrogenated nitrile rubber having an acid anhydride group content of 42.1 m-mol/100 g and an iodine value of 21 which was prepared in a manner substantially similar to that for the preparation of HNBR-3.

HNBR-8:

A hydrogenated nitrile rubber composition obtained by incorporating 20 parts of Aerosil #200 by a roll in a hydrogenated nitrile rubber having an acid anhydride group content of 84.5 m-mol/100 g and an iodine value of 13 which was prepared in a manner substantially similar to that for the preparation of HNBR-3.

HNBR-9:

A hydrogenated nitrile rubber composition obtained by incorporating 20 parts of Aerosil #200 by a roll in a hydrogenated nitrile rubber having an acid anhydride group content of 7.8 m-mol/100 g and an iodine value of 6 which was prepared by reacting a hydrogenated nitrile rubber having a Mooney viscosity of 32, an iodine value of 10 and a bound acrylonitrile content of 36% with maleic anhydride by substantially the same procedure as that for the preparation of HNBR-3.

HNBR-10:

A hydrogenated nitrile rubber composition obtained by incorporating 20 parts of Aerosil #200 in HNBR-4 by a roll.

HNBR-11:

A hydrogenated nitrile rubber having a weight average molecular weight of 6,300, an iodine value of 24, a bound acrylonitrile content of 36% and an acid anhydride group content of 68.5 m-mol/100 g, which was prepared by reacting a hydrogenated liquid NBR with maleic anhydride by substantially the same procedure as that for the preparation of HNBR-3.

HNBR-12:

A hydrogenated nitrile rubber having a weight average molecular weight of 7,100, an iodine value of 23, a bound acrylonitrile content of 35% and an epoxy group content of 20.3 m-mol/100 g, which was prepared by reacting a hydrogenated liquid NBR with glycidyl methacrylate by substantially the same procedure as that for the preparation of HNBR-4.

NBRs used in the examples and comparative examples are as follows.

NBR-1:

A NBR composition obtained by incorporating 20 parts of Aerosil #200 by a roll in an NBR having an acid anhydride content of 21.1 m-mol/100 g and an iodine value of 272 which was prepared by reacting an NBR having a bound acrylonitrile content of 36% and a Mooney viscosity of 27 at 100°C with maleic anhydride by substantially the same procedure as that for the preparation of HNBR-3.

Organopolysiloxanes used in the examples and comparative examples are as follows.

Silicone Rubber-1:

A silicone rubber composition obtained by incorporating 20 parts of Aerosil #200 in a polydimethylpolysiloxane rubber having a carbon-to-carbon unsaturatde bond content of 470 ppm by a 1,8 liter Banbury mixer.

Silicone Rubber-2:

A silicone rubber composition obtained by incorporating aminated polydimethylsiloxane (BY16-850 supplied by Toray Silicone ) in Silicone Rubber-1 to an extent such that the content of an amino group in the composition is 25.0 m-mol/100 g.

Silicone Rubber-3:

A silicone rubber composition obtained by incorporating carboxylated polydimethylsiloxane (SF8418 supplied by Toray Silicone) in Silicone Rubber-1 to an extent such that the content of a carboxylic acid group in the composition is 25.0 m-mol/100 g.

Silicone Rubber-4:

A silicone rubber composition obtained by incorporating epoxidized polydimethylsiloxane (BX16-863 supplied by Toray Silicone) in Silicone Rubber-1 to an extent such that the content of an epoxy group is 25.0 m-mol/100 g.

Silicone Rubber-5:

A siliscone rubber composition obtained by incorporating aminated polydimethylsiloxane (AB9 supplied by Rhone Poulenc Chimie) in a silicone rubber composition (a) to an extent such that the content of an amino group is 5.0 m-mol/100 g. The silicone rubber composition (a) used was prepared by incorporating 20 parts of Aerosil #200 in Silicone Rubber-1 (thus, the content of Aerosil #200 in the silicone rubber composition (a) was 40 parts).

Silicone Rubber-6:

A silicone rubber composition obtained by incorporating aminated polydimethylsiloxane (M468 supplied by Rhone Poulenc Chimie) in a silicone rubber composition (b) to an extent such that the content of an amino group is 10.0 m-mol/100 g. The silicone rubber composition (b) used was prepared by incorporating 30 parts of Aerosil #200 in Silicone Rubber-1 (thus, the content of Aerosil #200 in the silicone rubber composition (b) was 50 parts).

Silicone Rubber-7:

A silicone rubber composition obtained by incorporating epoxidized polydimethylsiloxane (BX16-863 supplied by Toray Silicone) in the silicone rubber composition (b) containing 50 parts of Aerosil #200, to an extent such that the content of an epoxy group is 35.0 m-mol/100 g.

Silicone Rubber-8:

Aminated polydimethylsiloxane rubber having a weight average molecular weight of 55,000 and an amino group equivalent of 800.

Silicone Rubber-9:

A silicone rubber composition obtained by incorporating aminated polydimethylsiloxane (BY16-850 supplied by Toray Silicone) in the silicone rubber composition (a) containing 40 parts of Aerosil #200, to an extent such that the content of an amino group is 25.0 m-mol/100 g.

Peroxides and anti-aging agents used in the examples and comparative examples are as follows.

Peroxide 1:
Perbutyl P supplied by Nippon Oil and Fat.
Peroxide 2:
Perhexa 2.5B supplied by Nippon Oil and Fat.
Anti-aging agent 1:
Iruganox 1010 supplied by Ciba-Geigy.

The rubber formulation of the invention was press-cured at 170°C for 25 minutes and then the physical properties were evaluated according to JIS K-6301.

The formulation of the invention was cured, and the dispersion state was observed by a transmission type electron microscope and the dispersed particle size was measured by the electron photomicrograph.

Examples 1 through 5

In Examples 1 through 5, typical examples of the reaction of the functional groups for the improvement of compatibility between HNBR and the silicone rubber are shown. More specifically, the following reactions are shown in these examples.

Example 1: reaction of HNBR containing a carboxylic acid group with a silicone rubber containing an amino group

Example 2: reaction of HNBR containing a carboxylic acid group and a silicone rubber containing an epoxy group

Example 3: reaction of HNBR containing a carboxylic acid anhydride with a silicone rubber containing an amino group

Example 4: reaction of HNBR containing an epoxy group and a silicone rubber containing an amino group

Example 5: reaction of HNBR containing an epoxy group with a silicone rubber containing a carboxylic acid group.

HNBR and the silicone rubbers shown in Table 1 were kneaded at a temperature of 150°C and a rotation number of 50 ppm for 15 minutes by using an electric heating type laboplastomill supplied by Toyo Seiki, which is a closed type kneader having an inner capacity of 580 ml and equipped with Banbury blades. In this kneading procedure, the HNBR was first charged and 3 minutes later the silicone rubber was charged. After a while from the charge of the silicone rubber, the torque reached to the maximum value and then gradually reduced and, fifteen minutes' later, reached a constant value. The kneaded mixture was wound up on a 6-inch roll maintained at room temperature and peroxide 1 was kneaded into the sheet to obtain a rubber formulation. The thus-prepared rubber formulations were press-cured under the above-mentioned conditions to obtain sheets having a thickness of 2 mm. The obtained sheets were subjected to the hardness test, tensile test, tearing test and dispersibility test using a transmission electron microscope. The results are shown in Table 1.

Comparative Examples 1 through 3

In Comparative Example 1, HNBR having no functional group and a silicone rubber having no functional group were used.

In Comparative Example 2, HNBR having a carboxylic acid group and a silicone rubber having no functional group were used.

In Comparative Example 3, HNBR having no functional group and a silicone rubber having an amino group were used.

Rubber formulations were prepared according to the recipes shown in Table 1 under the same conditions as described in Examples 1 through 5, and they were tested and evaluated in the same manner as described in Examples 1 through 5. The results are shown in Table 1.

From the comparison of Examples 1 through 5 with Comparative Examples 1 through 3, it is seen that the composition of the examples exhibit enhanced tensile strength and tear strength because the functional groups of HNBR and the silicone rubber are reacted with each other.

Furthermore, as is apparent from the results of the dispersibility evaluation test using the transmission electron microscope, in the examples of the present invention, the dispersed particle size was much smaller than that in the comparative examples and thus a good dispersibility was attained. HNBR and a silicone rubber are remarkably different in the polarity, and therefore, the affinity is very low. If they are mixed together, the dispersion state is generaly bad as shown in the comparative examples, and the obtained formulation is difficult to put into practical use. It is understood that if HNBR having a carboxylic acid group and/or an epoxy group and the silicone rubber having the functional group are used according to the present invention, the dispersibility can be much improved and a cured product having excellent mechanical properties can be obtained.

TABLE 1

| | | Examples | | | | | Comp. Ex. | | |
|---|---|---|---|---|---|---|---|---|---|
| | | 1 | 2 | 3 | 4 | 5 | 1 | 2 | 3 |
| Recipe (parts) | | | | | | | | | |
| HNBR-1 | | – | – | – | – | – | 70 | – | 70 |
| HNBR-2 | | 70 | 70 | – | – | – | – | 70 | – |
| HNBR-3 | | – | – | 70 | – | – | – | – | – |
| HNBR-4 | | – | – | – | 70 | 70 | – | – | – |
| Silicone rubber-1 | | – | – | – | – | – | 30 | 30 | – |
| Silicone rubber-2 | | 30 | – | 30 | 30 | – | – | – | 30 |
| Silicone rubber-3 | | – | – | – | – | 30 | – | – | – |
| Silicone rubber-4 | | – | 30 | – | – | – | – | – | – |
| Peroxide-1 | | 1.5 | 1.5 | 1.5 | 1.5 | 1.5 | 1.5 | 1.5 | 1.5 |
| Properties | | | | | | | | | |
| Hardness | JIS A | 39 | 38 | 40 | 40 | 38 | 42 | 43 | 39 |
| Tensile strength | MPa | 9.7 | 10.8 | 12.2 | 10.7 | 10.3 | 6.7 | 5.8 | 6.2 |
| Elongation | % | 550 | 500 | 470 | 510 | 530 | 340 | 410 | 400 |
| 100% Stress | MPa | 0.8 | 0.8 | 1.0 | 0.9 | 0.8 | 0.9 | 0.8 | 0.9 |
| Tear strength | kN/m | 12 | 14 | 14 | 13 | 14 | 10 | 11 | 9 |
| Part. diameter *1 | μm | 2.0 | 1.2 | 0.6 | 1.0 | 1.1 | 8 | 8 | 7 |

*1 Dispersed particle diameter

Examples 6, 7 and 8 and Comparative Examples 4 through 9

In these examples and comparative examples, HNBR and the silicone rubber were mixed at various ratios as shown in Table 2, and rubber formulations were prepared and molded and evaluated by substantially the same procedures as described in Examples 1 through 5.

In Comparative Examples 4, 5 and 6, HNBR containing a carboxylic acid group, HNBR containing no functional group and a silicone rubber containing an amino group wereused alone, respectively. In Comparative Examples 7 to 9, HNBR containing no functional group and a silicone rubber containing an amino group were used at ratios shown in Table 2. The results are shown in Table 2.

TABLE 2

| | Example | | | Comp. Ex. | | | | | |
|---|---|---|---|---|---|---|---|---|---|
| | 6 | 7 | 8 | 4 | 5 | 6 | 7 | 8 | 9 |
| **Recipe (parts)** | | | | | | | | | |
| HNBR-3 | 25 | 50 | 75 | 100 | – | – | – | – | – |
| HNBR-1 | – | – | – | – | 100 | – | 25 | 50 | 75 |
| Silicone rubber-2 | 75 | 50 | 25 | – | – | 100 | 75 | 50 | 25 |
| Peroxide-1 | 1.5 | 1.5 | 1.5 | 2.5 | 2.5 | 0.5 | 1.5 | 1.5 | 1.5 |
| **Properties** | | | | | | | | | |
| Hardness      JIS A | 27 | 33 | 43 | 43 | 49 | 22 | 27 | 34 | 44 |
| Tens. strength MPa | 5.0 | 9.7 | 13.2 | 11.1 | 9.7 | 1.0 | 1.8 | 3.3 | 6.7 |
| Elongation     % | 230 | 360 | 440 | 540 | 330 | 290 | 210 | 220 | 270 |
| 100% Stress   MPa | 0.6 | 0.9 | 1.0 | 1.0 | 1.0 | 0.4 | 0.6 | 0.7 | 1.0 |
| Tear strength kN/m | 7 | 13 | 14 | 14 | 14 | 6 | 6 | 7 | 10 |
| Dispersed phase *1 | N | N/Q | Q | – | – | – | N | N | Q |
| Part. diameter*2 μm | 1.3 | 0.8 | 0.5 | – | – | – | 36 | 34 | 11 |

*1  N: hydrogenated nitrile rubber,  Q: silicone rubber

*2  Dispersed particle diameter

As seen from the comparison of Examples 6 to 8 with Comparative Examples 7 to 9, the rubber formulations of the invention exhibit enhanced tensile strength and tear strength over a broad range of the mixing ratio of HNBR and the silicone rubber. Especially, as seen from the comparison of Examples 6 to 8 with Comparative Examples 4 and 6, the formulations of the invention exhibit tensile strength and tear strength exceeding the additivity values. Further, the evaluation of the dispersion state by the transmission type electron microscope shows that the dispersed particle diameter and dispersibility obtained with the present invention are satisfactory as compared with the comparative examples over a broad range of the mixing ratio of HNBR and the silicone rubber.

Examples 9 through 14 and Comparative Example 10

In these examples, HNBR and the silicone rubber,which contain functional groups at various contents as shown in Table 2, were used, and rubber formulations were prepared and evaluated by substantially the same procedures as described in Examples 1 through 5.

In Examples 9 through 14, a composition of HNBR with an acid anhydride group and 20 parts of silica, and a composition of a silicone rubber with an amino group and 40 parts of silica were used. In Examples 9 to 12, the contents of the functional groups in HNBR and the silicone rubber increased with the order of the example number. In Examples 13 and 14, the content of the functional group in one of HNBR and the silicone rubber was increased. In Comparative Example 10, HNBR not having the functional group and a silicone rubber containing an amino group were used. The results are shown in Table 3.

Examples 9 to 12 and Comparative Example 10 show that the desired tensile strength and tear strength can be obtained with a broad range of the content of the functional groups in HNBR and the silicone rubber.

TABLE 3

| | Example | | | | | | Com. Ex. |
|---|---|---|---|---|---|---|---|
| | 9 | 10 | 11 | 12 | 13 | 14 | 10 |
| Recipe (parts) | | | | | | | |
| HNBR-5 | 60 | - | - | - | 60 | - | - |
| HNBR-6 | - | 60 | - | - | - | - | - |
| HNBR-7 | - | - | 60 | - | - | 60 | - |
| HNBR-8 | - | - | - | 60 | - | - | - |
| HNBR-1 | - | - | - | - | - | - | 60 |
| Silicone rubber-5 | 40 | - | - | - | - | 40 | 40 |
| Silicone rubber-9 | - | 40 | 40 | 40 | 40 | - | - |
| Peroxide-1 | 1.5 | 1.5 | 2.5 | 2.5 | 0.5 | 1.5 | 1.5 |
| Properties | | | | | | | |
| Hardness        JIS A | 60 | 62 | 63 | 65 | 58 | 63 | 61 |
| Tensile strength MPa | 17.1 | 20.0 | 21.5 | 12.6 | 15.0 | 16.8 | 11.6 |
| Elongation        % | 400 | 340 | 270 | 170 | 430 | 280 | 410 |
| 100% Stress        MPa | 1.7 | 2.0 | 3.0 | 6.6 | 1.5 | 2.4 | 1.5 |
| Tear strength kN/m | 13 | 15 | 14 | 12 | 13 | 12 | 11 |

Examples 15 to 17 and Comparative Examples 10 and 11

Rubber formulations were prepared from the ingredients shown in Table 4 at the specified recipes by substantially the same procedures as described in Examples 1 to 5, and molded and evaluated.

The aging resistance was evaluated by aging the sample at 175°C for 70 hours in a gear oven and then measuring the tensile properties. The oil resistance was evaluated by immersing the sample in JIS #3 oil at 150°C for 70 hours and then measuring the tensile properties. The cold resistance was evaluated by a tortional tester. The results are shown in Table 4.

In Examples 15 and 16, HNBRs containing an acid anhydride group and having different iodine values were used separately in combination with a silicone rubber containing an amino acid. In Example 17, HNBR containing an epoxy group was used in combination with a silicone rubber containing an amino group. In Examples 15 to 17, HNBR and the silicone rubber were used as compositions containing 20 parts and 50 parts of silica, respecively. In Comparative Examples 11 and 12, HNBR containing no functional group and NBR containing an acid anhydride were used, respectively, in combination with a silicone rubber containing an amino group. In these comparative examples, HNBR and NBR were used as compositions containing 20 parts of silica and the silicone rubber was used as a composition containing 50 parts of silica.

The rubber formulations of Examples 15 to 17 are superior to those of Comparative Examples 11 and 12 in tensile strength, heat aging resistance and cold resistance. The comparison of these examples with Comparative Example 12 shows that the examples with an iodine value of not larger than 120 are superior to the comparative example with an iodine value exceeding 120 in tensile strength, heat aging resitance and cold resistance.

TABLE 4

|  |  | Example | | | Comp.Ex. | |
|---|---|---|---|---|---|---|
|  |  | 15 | 16 | 17 | 11 | 12 |
| Recipe (parts) |  |  |  |  |  |  |
| HNBR-9 |  | 50 | – | – | – | – |
| HNBR-6 |  | – | 50 | – | – | – |
| HNBR-7 |  |  |  |  |  |  |
| HNBR-10 |  | – | – | 50 | – | – |
| HNBR-1 |  | – | – | – | 50 | – |
| NBR-1 |  | – | – | – | – | 50 |
| Silicone rubber-6 |  | 50 | 50 | 50 | 50 | 50 |
| Anti-aging agent-1 |  | 1 | 1 | 1 | 1 | 1 |
| Peroxide-2 |  | 1.5 | 1.5 | 1.5 | 1.5 | 0.6 |
| Properties |  |  |  |  |  |  |
| Initial properties |  |  |  |  |  |  |
| Hardness | JIS A | 63 | 62 | 62 | 63 | 68 |
| Tensile strength | MPa | 15.5 | 14.8 | 13.5 | 10.1 | 9.7 |
| Elongation | % | 350 | 310 | 330 | 410 | 170 |
| Heat aging resistance *1 |  |  |  |  |  |  |
| Tensile strength | MPa | 12.6 | 10.2 | 9.7 | 6.0 | Broken |
| Elongation | % | 220 | 100 | 80 | 30 |  |
| Oil resistance *2 |  |  |  |  |  |  |
| Volume change | % | 27 | 27 | 29 | 29 | 24 |
| Cold resistance *3 |  |  |  |  |  |  |
| $T_6$ | °C | –34 | –31 | –32 | –28 | –28 |
| $T_{100}$ | °C | –50 | –49 | –50 | –47 | –44 |

*1 Aging at 175°C for 70 hours in a gear oven

*2 Immersion in JIS #3 oil at 150°C for 70 hours

*3 Gehman tortional test

Examples 18 and 20

In these examples, rubber formulations of the invention were evaluated wherein one of the HNBR and the silicone rubber is crosslinked with and dispersed in the other.

In Example 18, HNBR containing an acid anhydride and a silicone rubber containing no functional group were kneaded at 180°C and a rotation number of 50 rpm for 15 minutes by using the same kneader as that used in Examples 1 to 5 and then a polysiloxane having a polyfunctional amino group was incorporated. The mixture was kneaded for 10 minutes until the torque passed the maximum value became approximately constant whereby a kneaded mixture was obtained wherein the HNBR was crosslinked with the polyfunctional amino group-containing polysiloxane and dispersed in the silicone rubber. The kneaded mixture was wound up on a 6-inch roll maintained at room temperature and peroxide-2 was kneaded into the sheet to obtain a rubber formulation. The rubber formulation was press-cured under the above-mentioned conditions to obtain sheets having a thickness of 2 mm. The sheets were evaluated in the same manner as described in Examples 15 to 16.

In Example 19, HNBR containing no functional group and a silicone rubber containing an epoxy group were keaded, and later, liquid HNBR containing a carboxylic acid group was incorporated and kneaded together to prepare a kneaded mixture wherein the silicone rubber is crosslinked with the liquid carboxylic acid group-containing HNBR and dispersed in the HNBR containing no functional group. All other conditions and procedures remained substantially the same as those in Example 15.

In Example 20, HNBR containing no functional group and a silicone rubber containing a carboxylic caid group were kneaded, and later, liquid HNBR containing an epoxy group was incorporated and kneaded together to prepare a kneaded mixture wherein the silicone rubber is crosslinked with the liquid epoxy group-containing HNBR and dispersed in the HNBR containing no functional group. All other conditions and procedures remained substantially the same as those in Example 15.

The evaluation results are shown in Table 5.

EP 0 559 515 A1

## TABLE 5

|  |  | Example | | |
|---|---|---|---|---|
|  |  | 18 | 19 | 20 |
| **Recipe (parts)** | | | | |
| HNBR-1 |  | – | 45 | 45 |
| HNBR-7 |  | 50 | – | – |
| HNBR-11 |  | – | 5 | – |
| HNBR-12 |  | – | – | 5 |
| Silicone rubber-1 |  | 45 | – | – |
| Silicone rubber-3 |  | – | – | 50 |
| Silicone rubber-7 |  | – | 50 | – |
| Silicone rubber-8 |  | 5 | – | – |
| Anti-aging agent-1 |  | 1 | 1 | 1 |
| Peroxide-2 |  | 1.5 | 1.5 | 1.5 |
| **Properties** | | | | |
| **Initial properties** | | | | |
| Hardness | JIS A | 61 | 64 | 62 |
| Tensile strength | MPa | 10.8 | 14.2 | 13.3 |
| Elongation | % | 250 | 270 | 290 |
| **Heat aging resistance** *1 | | | | |
| Tensile strength | MPa | 9.6 | 7.3 | 6.5 |
| Elongation | % | 180 | 40 | 40 |
| **Oil resistance** *2 | | | | |
| Volume change | % | 30 | 24 | 25 |
| **Cold resistance** *3 | | | | |
| $T_5$ | °C | –40 | –27 | –27 |
| $T_{100}$ | °C | –54 | –45 | –44 |

*1 Aging at 175°C for 70 hours in a gear oven

*2 Immersion in JIS #3 oil at 150°C for 70 hours

*3 Gehman tortional test

The rubber formulation of Example 18 does not exhibit an improvement of tensile strength, but exhibits a drastic improvement of heat aging resistance and cold resistance. The heat aging resistance and cold resistance are much higher than those attained in Examples 15 to 17 and Comparative Examples 11 and 12. The rubber formulations of Examples 19 and 20 exhibit an improvement in tesile strength and oil resistance.

## Claims

1.  A rubber formulation comprising, based on the weight of the rubber formulation:
    (a) 2 to 98% by weight of a hydrogenated nitrile rubber containing at least one functional group selected

15

from a carboxylic acid group and an epoxy group, and
(b) 98 to 2% by weight of an organopolysiloxane containing a functional group capable of reacting with the above-mentioned functional group.

2. A rubber formulation as claimed in claim 1, wherein said hydrogenated nitrile rubber has an iodine value of not larger than 120.

3. A rubber formulation as claimed in claim 1 or 2, wherein said hydrogenated nitrile rubber containing the functional group selected from a carboxylic acid group and an epoxy group is a mixture of a solid hydrogenated nitrile rubber not containing the functional group selected from a carboxylic acid and an epoxy group and a liquid hydrogenated nitrile rubber containing the functional group selected from a carboxylic acid group and an epoxy group.

4. A rubber formulation as claimed in any of claims 1 to 3, wherein the content of the functional group selected from a carboxylic acid and an epoxy group in said hydrogenated nitrile rubber is 0.5 to 70 m-mol per 100 g of said hydrogenated nitrile rubber.

5. A rubber formulation as claimed in any of claims 1 to 3, wherein the content of the functional group selected from a carboxylic acid and an epoxy group in said hydrogenated nitrile rubber is 1 to 30 m-mol per 100 g of said hydrogenated nitrile rubber.

6. A rubber formulation as claimed in any of claims 1 to 5, wherein said hydrogenated nitrile rubber is a product prepared by copolymerizing an unsaturated monomer having the functional group selected from a carboxylic acid group and an epoxy group with a nitrile-rubber forming monomer, or by graft-polymerizing an unsaturated monomer having the functional group selected from a carboxylic acid group and an epoxy group onto a hydrogenated nitrile rubber or an unhydrogenated nitrile rubber.

7. A rubber formulation as claimed in claim 6, wherein said hydrogenated nitrile rubber is a hydrogenation product of an $\alpha,\beta$-unsaturated nitrile-conjugated diene copolymer rubber or a hydrogenation product of an $\alpha,\beta$-unsaturated nitrile-conjugated diene-ethylenically unsaturated monomer terpolymer rubber.

8. A rubber formulation as claimed in any of claims 1 to 7, wherein said organopolysiloxane is comprised of recurring units of a siloxane represented by the following average composition formula:

$$R_aSi_{(4-a)/2}$$

wherein R represents a substituted or unsubstituted hydrocarbon, and $\underline{a}$ is a number of from 1 to 3.

9. A rubber formulation as claimed in any of claims 1 to 8, wherein said organopolysiloxane containing a functional group capable of reacting with a carboxylic acid group or an epoxy group is a mixture of a solid organopolysiloxane not containing a functional group capable of reacting with a carboxylic acid group and an epoxy group and a liquid organopolysiloxane containing a functional group capable of reacting with a carboxylic acid group or an epoxy group.

10. A rubber formulation as claimed in any of claims 1 to 9, wherein said organopolysiloxane contains at least 100 ppm, based on the weight of the organopolysiloxane, of carbon- to-carbon unsaturated bonds.

11. A rubber formulation as claimed in any of claims 1 to 10, wherein said organopolysiloxane contains 0.5 to 70 m-mol, per 100 g of said organopolysiloxane, of a functional group capable of reacting with the functional group of the hydrogenated nitrile rubber.

12. A rubber formulation as claimed in any of claims 1 to 10, wherein said organopolysiloxane contains 1 to 30 m-mol, per 100 g of said organopolysiloxane, of a functional group capable of reacting with the functional group of the hydrogenated nitrile rubber.

13. A rubber formulation as claimed in any of claims 1 to 12, wherein said hydrogenated nitrile rubber containing the functional group selected from a carboxylic acid group and an epoxy group is crosslinked with and dispersed in said organopolysiloxane containing a functional group capable of reacting with a carboxylic acid group or an epoxy group.

14. A rubber formulation as claimed in claim 13, wherein said hydrogenated nitrile rubber contains 10 to 70 m-mol, per 100 g of said hydrogemated nitrile rubber, of the functional group selected from a carboxylic acid group and an epoxy group; said organopolysiloxane contains 0.5 to 20 m-mol, per 100 g of said organopolysioxane, of the functional group capable of reacting with a carboxylic acid group or an epoxy group; and the rubber formulation comprises, based on the weight of the rubber formulation, 2 to 60% by weight of said hydrogenated nitrile rubber and 98 to 40% by weight of said organopolysiloxane.

15. A rubber composition as claimed in any of claims 1 to 12, wherein said organopolysiloxane containing a functional group capable of reacting with a carboxylic acid group or an epoxy group is crosslinked with and dispersed in the hydrogenated nitrile rubber containing a carboxylic acid group or an epoxy group.

16. A rubber composition as claimed in claim 15, wherein said organopolysiloxane contains 10 to 70 m-mol, per 100 g of said organopolysiloxane, of a functional group capable of reacting with a carboxylic acid group or an epoxy group; said hydrogenated nitrile rubber contains 0.5 to 20 m-mol, per 100 g of said hydrogenated nitrile rubber, of the functional group selected from a carboxylic acid group or an epoxy group; and the rubber formulation comprises, based on the weight of the rubber fromulation, 2 to 60% by weight of said organopolysiloxane and 98 to 40% by weight of said hydrogenated nitrile rubber.

17. A rubber formulation as claimed in any of claims 1 to 16, wherein said hydrogenated nitrile rubber contains a carboxylic acid group and said organopolysiloxane contains a functional group selected from an amino group, a hydroxyl group and an epoxy group; or said hydrogenated nitrile rubber contains an epoxy group and said organopolysiloxane contains a functional group selected from an amino group, a hydroxyl group and a carboxylic acid group.

18. A rubber formulation as claimed in any of claims 1 to 17, wherein the rubber formulation is prepared through a reaction between said hydrogenated nitrile rubber and said organopolysiloxane by stirring a solution of the two ingredient in an solvent at a temperature of 0 to 200°C.

19. A rubber formulation as claimed in any of claims 1 to 17, wherein the rubber formulation is prepared through a reaction between said hydrogenated nitrile rubber and said organopolysiloxane by kneading together the two ingredients at a temperature of 20 to 300°C.

20. A crosslinked rubber formulation which is prepared by crosslinking the rubber formulation claimed in any of claims 1 to 19 with a peroxide.

| | European Patent Office | EUROPEAN SEARCH REPORT | Application Number |
|---|---|---|---|
| | | | EP 93 40 0426 |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 405 461 (JAPAN SYNTHETIC RUBBER CO., LTD. ET AL.)<br>* claims 1-8,10; example 8 *<br>* column 4, line 26 - column 5, line 19 *<br>--- | 1 | C08L13/00<br>C08L15/00<br>C08L83/04<br>C08L83/06<br>C08L83/08 |
| D,A | DE-A-3 812 354 (KARL JOH GUMMIWARENFABRIK GMBH)<br>* claims 1,2 *<br>--- | 1 | |
| P,A | GB-A-2 247 461 (KANSAI PAINT CO LTD)<br>* page 13, line 19 - line 25; claims 1-8 *<br>--- | 1 | |
| A | EP-A-0 005 786 (WACKER-CHEMIE GMBH)<br>* page 6, last paragraph - page 7, paragraph 4; claim 1 *<br>----- | | |
| | | | TECHNICAL FIELDS SEARCHED (Int. Cl.5)<br><br>C08L |

The present search report has been drawn up for all claims

| Place of search | Date of completion of the search | Examiner |
|---|---|---|
| THE HAGUE | 27 MAY 1993 | KANETAKIS I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................
& : member of the same patent family, corresponding document